# EUROPEAN PATENT SPECIFICATION

(11) **EP 2 587 568 B1**
(45) Date of publication and mention of the grant of the patent: **11.01.2017**
(21) Application number: 12189911.6
(22) Date of filing: 25.10.2012
(51) Int. Cl.: H01M 2/36

(54) **Sealing plug and energy storage element**
Abdichtungsstecker und Energiespeicherelement
Bouchon d'étanchéité et élément de stockage d'énergie

(30) Priority: 26.10.2011 JP 2011235369; 21.09.2012 JP 2012208359
(43) Date of publication of application: 01.05.2013
(73) Proprietor: GS Yuasa International Ltd., Kisshoin, Minami-ku, Kyoto-shi, Kyoto 601-8520 (JP)
(72) Inventor: Kambayashi, Hirokazu, Kyoto-shi, Kyoto 601-8520 (JP)
(74) Representative: Isarpatent

(56) References cited:
- JP-A- 2010 021 027
- US-A1- 2008 138 548
- US-A1- 2008 160 393
- US-B1- 6 455 193

## Description

### Field

The present invention relates to an energy storage element which uses a sealing plug.

### Background

In addition to use as a replacement for primary batteries, secondary batteries are widely used as a source of power for electrical devices such as cellular telephones and information technology devices. In particular, non-aqueous electrolyte secondary batteries exemplified by the lithium-ion battery continue to be widely used in electric vehicles and other industrial large scale electronic devices for their high energy density characteristics.

This particular type of secondary battery generally includes an electrode assembly and an electrolyte housed in a container made of metal such as aluminum. The container, which has a prefabricated through hole in a surface thereof, is hermetically sealed after housing the electrode assembly. The electrolyte is then injected into the container via the through hole. Next, the through hole is sealed with a sealing plug made of metal to preserve the hermetically sealed state of the container (for example, see Patent Literature (PTL) 1).

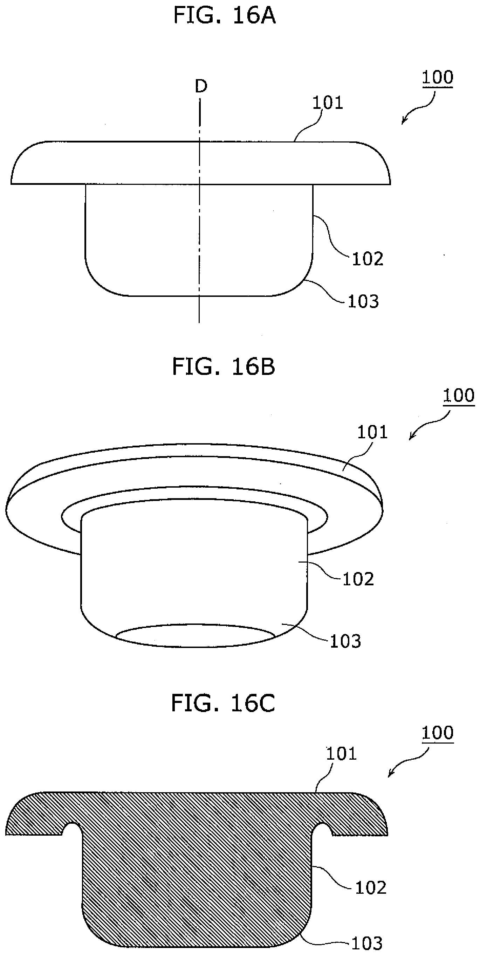

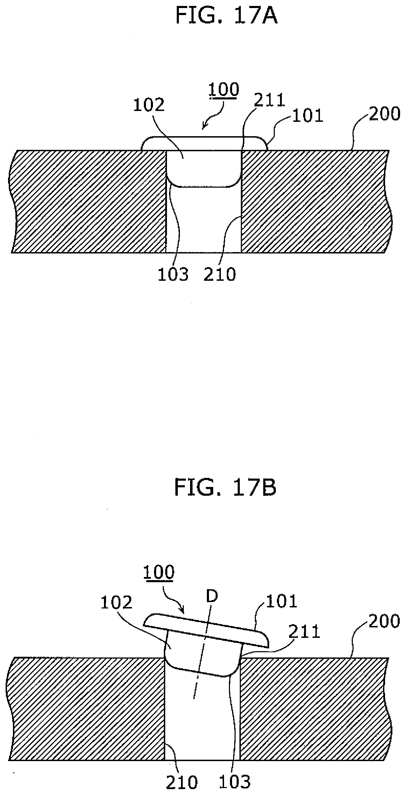

FIG. 16A is a side view of a secondary battery container sealing plug 100 having the conventional structure recited in PTL 1, FIG. 16B is a perspective view of the sealing plug 100, and FIG. 16C is a cross-sectional view of the sealing plug 100 (a cross-sectional view showing the sealing plug 100 sliced in a plane including the central axis D shown in FIG. 16A). FIG. 17A shows the sealing plug 100 when it is placed in the through hole 210.

As shown in these Drawings, the sealing plug 100 includes a base 102 which engages with a through hole 210 formed in a wall 200, and a flange 101 which locks to the surface of the wall 200. The sealing plug 100 is formed having a smooth, curved surface 103 on the edge of the tip of the base 102. The curved surface 103 is the portion most likely to come in contact with a rim 211 of the through hole 210. Since the metallic base 102 smoothly inserts into the through hole 210, contamination, such as metal residue resulting from two parts coming into contact, can be reduced.

### Citation List

### Patent Literature

[PTL 1] Japanese Patent No. 4110632

### Summary

However, the conventional sealing plug is problematic as there is a concern that manufacturability will be compromised due to poor stability of the sealing plug upon installation. The present invention has been made in view of the above problem, and an object of the present invention is to provide a sealing plug capable of being installed in a through hole in a stable manner and provide an energy storage element which uses such a sealing plug.

In order to achieve the above goal, an energy storage element according to an aspect of the present invention is defined in independent claim 1.
having an outer edge that is smaller than or equal to an outer edge of a cross section of the leading end of the base, the cross sections each being in a plane perpendicular to an axial direction of the main shaft, and the base includes: a thick portion having, in a plane perpendicular to the axial direction of the main shaft, a cross section having a largest outer edge; and a side surface portion having an outer edge which decreases in size from the thick portion towards the tip.

With this, since the main shaft of the sealing plug is shaped such that an outer edge of a cross section thereof decreases in size from the thick portion of the base to the tip of the base, the main shaft can easily be inserted into the through hole and the sealing plug can be provisionally fixed while maintaining a proper position. As a result, this sealing plug can be stably installed in the through hole.

Moreover, the thick portion may be provided at an end of the base opposite the tip and positioned at a rim of the through hole when the sealing plug seals the through hole.

With this, since the thick portion, which has the largest outer edge dimensions, is positioned at the rim of the through hole, contact between the main shaft and the rim and contamination resulting therefrom can be reduced when the main shaft is inserted into the through hole.

Moreover, the thick portion may be formed in a cylindrical shape extending from an end of the base opposite the tip to an end of the side surface portion.

With this, since the thick portion is formed in a cylindrical shape, the sealing plug can be more securely provisionally fixed in the through hole due to the thick portion engaging with the through hole. As a result, manufacturability can be improved by omitting a fixing process to fix the sealing plug to the container by low-output laser welding.

Moreover, along at least a portion of the side surface portion, a rate of change in outer circumference of a cross section in a plane perpendicular to the axial direction of the main shaft may vary.

With this, the main shaft is shaped such that the rate of change in outer circumference from the thick portion toward the tip varies, in other words, is shaped such that, along at least a portion of the surface, the outer edge of a cross section in a plane parallel to the axial direction of the main shaft is a curved line. As a result, contamination, resulting from contact between the main shaft and the rim and inside of the through hole, can be reduced upon insertion of the main shaft into the through hole.

Moreover, an exposed portion may be connected to an end of the base opposite the tip and positioned, when the sealing plug seals the through hole, on a surface of the wall so as to be exposed from the wall.

With this, due to the exposed portion being exposed above the surface of the wall when the sealing plug seals the through hole, the sealing plug can be easily inserted and stably installed in the through hole.

Moreover, an outer shape of a portion of the base between an end of the base opposite the tip and an end of the side surface portion may correspond to an inner shape of the through hole.

With this, since the outer shape of a portion on the base end of the base corresponds with the inner shape of the through hole, the sealing plug can be more securely provisionally fixed in the through hole due to the portion on the base end engaging with the through hole. As a result, the process of temporarily fixing the sealing plug can be omitted, and manufacturability can be improved.

Moreover, a distance from a leading end of the tip to the base may be greater than a distance from the leading end of the tip to a center of gravity of the main shaft.

With this, due to the center of gravity of the main shaft being positioned closer to the tip than the base, the sealing plug can rapidly assume its proper position upon insertion into the through hole.

Moreover, the tip may be longer than the base in the axial direction of the main shaft.

With this, due to the main shaft being formed such that the tip is longer than the base, the sealing plug can rapidly assume its proper position upon insertion into the through hole.

Moreover, when the sealing plug seals the through hole, a length of the main shaft in the axial direction may be less than or equal to a length of the through hole in the axial direction.

With this, due to the length of the main shaft being shorter than or equal to the length of the through hole, the main shaft will not protrude out from the bottom of the through hole, and the sealing plug will not penetrate into the housing space beyond the wall.

Moreover, a radius of the thick portion may be shorter than a longest straight line connecting (i) a center of an end surface of the base opposite the tip or a center of an interface of the thick portion and the side surface portion, and (ii) a leading end surface of the tip.

With this, since the radius of the thick portion is shorter than the longest straight line connecting (i) the center of the end surface of the base end of the base or the center of the end of the thick portion towards the side surface portion, and (ii) the leading end surface of the tip, even if the sealing plug rotates upon insertion into the through hole, this rotation is inhibited by the tip.

Moreover, the base may have a side surface formed between an end of the base opposite the tip and the thick portion, and formed to have a cross section having an outer edge that is smaller than an outer edge of a cross section of the thick portion, the cross sections each being in a plane perpendicular to the axial direction of the main shaft.

With this, the base may be shaped having a portion whose outer edge is smaller than the thick portion formed more towards the base end than the thick portion. Even in this case, the main shaft can be easily inserted into the through hole, and the sealing plug can be stably installed in the through hole.

With this, since the through hole formed in the wall of the energy storage element is plugged with the above-described sealing plug, similar to the above description, the energy storage element in which the sealing plug is stably installed in the through hole can be achieved.

### Brief Description of Drawings

These and other objects, advantages and features of the invention will become apparent from the following description thereof taken in conjunction with the accompanying drawings that illustrate a specific embodiment of the present invention.
[FIG. 1] FIG. 1 is a side view illustrating the structure of the sealing plug used in the first embodiment of the present invention.
[FIG. 2A] FIG. 2A is a perspective view illustrating the structure of the sealing plug used in the first embodiment of the present invention.
[FIG. 2B] FIG. 2B is a perspective view illustrating the structure of the sealing plug used in the first embodiment of the present invention.
[FIG. 3] FIG. 3 illustrates an advantageous result achieved by the sealing plug used in the first embodiment of the present invention.
[FIG. 4] FIG. 4 is a side view illustrating the structure of the sealing plug used in the second embodiment of the present invention.
[FIG. 5A] FIG. 5A is a perspective view illustrating the structure of the sealing plug used in the second embodiment of the present invention.
[FIG. 5B] FIG. 5B is a perspective view illustrating the structure of the sealing plug used in the second embodiment of the present invention.
[FIG. 6] FIG. 6 illustrates an advantageous result achieved by the sealing plug used in the second embodiment of the present invention.
[FIG. 7A] FIG. 7A is a side view illustrating the structure of the sealing plug used in the first variation of an embodiment of the present invention.
[FIG. 7B] FIG. 7B is a perspective view illustrating the structure of the sealing plug used in the first variation of an embodiment of the present invention.
[FIG. 8] FIG. 8 illustrates an advantageous result achieved by the sealing plug used in the first variation of an embodiment of the present invention.
[FIG. 9A] FIG. 9A is a side view illustrating the structure of the sealing plug used in the second variation of an embodiment of the present invention.
[FIG. 9B] FIG. 9B is a perspective view illustrating the structure of the sealing plug used in the second variation of an embodiment of the present invention.
[FIG. 10] FIG. 10 is a side view illustrating the structure of the sealing plug used in the third variation of an embodiment of the present invention.
[FIG. 11] FIG. 11 is a side view illustrating the structure of the sealing plug used in the fourth variation of an embodiment of the present invention.
[FIG. 12] FIG. 12 is a side view illustrating the structure of the sealing plug used in the fifth variation of an embodiment of the present invention.
[FIG. 13] FIG. 13 is a side view illustrating the structure of the sealing plug used in the sixth variation of an embodiment of the present invention.
[FIG. 14] FIG. 14 is a cross-sectional view illustrating the structure of the sealing plug used in the seventh variation of an embodiment of the present invention.
[FIG. 15] FIG. 15 is an exploded perspective view illustrating a typical structure of a non-aqueous electrolyte secondary battery according to the third embodiment of the present invention which uses the sealing plug.
[FIG. 16A] FIG. 16A is a side view illustrating the structure of a conventional sealing plug.
[FIG. 16B] FIG. 16B is a perspective view illustrating the structure of a conventional sealing plug.
[FIG. 16C] FIG. 16C is a cross-sectional view illustrating the structure of a conventional sealing plug.
[FIG. 17A] FIG. 17A illustrates a conventional sealing plug inserted into the through hole.
[FIG. 17B] FIG. 17B illustrates a problem with the conventional sealing plug.

### Description of Embodiments

Problems related to the conventional structure of the sealing plug 100 as described above will be described hereinafter.

When the through hole 210 is sealed with the sealing plug 100, it is necessary to insert and provisionally fix the base 102 into the through hole 210. However, when the sealing plug 100 is actually placed in the through hole 210 by hand or with a tool, for example, the sealing plug 100 tilts at an angle with respect to the through hole 210, as shown in FIG. 17B. FIG. 17B illustrates the problem with the conventional sealing plug 100.

As a result of this tilting, even if there were a large margin between the outer diameter of the base 102 and the inner diameter of the through hole 210, the curved surface 103 of the base 102 would slip on the rim 211 of the through hole 210 and the side of the base 102 would get stuck on the rim 211 of the through hole 210. Consequently, the success rate of placing the sealing plug 100 in the through hole 210 in a stabilized position decreases.

In order to provisionally fix the sealing plug 100 it is necessary to readjust the positioning of the sealing plug 100. This considerably reduces workability and manufacturability in the making of the secondary battery.

The conventional sealing plug is problematic because there is a concern that manufacturability will be compromised due to poor stability of the sealing plug upon installation.

The present invention has been made in view of the above problem, and an object of the present invention is to provide a sealing plug capable of being installed in a through hole in a stable manner and an energy storage element which uses such a sealing plug.

Hereinafter, embodiments of present invention are described with reference to the Drawings. Each of the exemplary embodiments described below shows a general or specific example. The numerical values, shapes, materials, structural elements, the arrangement and connection of the structural elements etc. shown in the following exemplary embodiments are mere examples, and therefore do not limit the scope of the appended Claims and their equivalents. Therefore, among the structural elements in the following exemplary embodiments, structural elements not recited in any one of the independent claims are described as arbitrary structural elements.

### (First Embodiment)

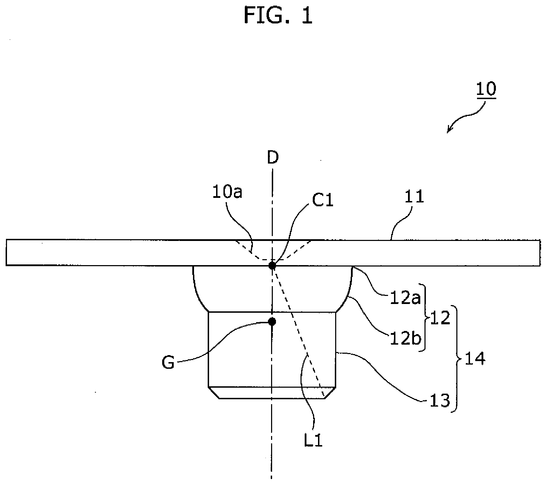

FIG. 1 is a side view illustrating the structure of a sealing plug 10 used in the first embodiment of the present invention.

As FIG. 1 shows, the sealing plug 10 is a sealing plug which seals a through hole formed in a wall, and similar to the conventional example, is made out of aluminum and forms a concentric circle when viewed from the central axis D parallel to the length of the through hole. The sealing plug 10 includes a flange 11 and a main shaft 14, and the main shaft 14 includes a base 12 and a tip 13.

Similar to the conventional flange 101, the flange 11 is disk-shaped, directly seals the through hole, and is connected to the end of the base 12 opposite the tip 13 (shown as on the top in FIG. 1). According to the first embodiment, the flange 11 is an exposed portion positioned on a surface of the wall so as to be exposed from the wall when the through hole is sealed by the sealing plug 10. It is to be noted that the shape of the flange 11 is not limited to a disk, but may be a rectangular plate, for example. Moreover, the flange 11 is intended to be included in the exposed portion recited in the Claims.

The main shaft 14 is a portion which is placeable in the through hole and is formed to have a length in the axial direction (central axis D) that is less than or equal to the length of the through hole in the axial direction when the through hole is sealed by the sealing plug 10. Hereinafter, the base 12 and the tip 13 included in the main shaft 14 will be described in detail.

The base 12 is positioned at the base end of the main shaft 14 closer to the flange 11 (shown as on the top in FIG. 1), and has dimensions that allow the base 12 to be inserted in the through hole. Specifically, the base 12 is formed to have round cross section in a plane perpendicular to the axial direction of the main shaft 14. Moreover, the distance from a leading end of the tip 13 to the base 12 is greater than the distance from the leading end of the tip 13 to a center of gravity (G in FIG. 1) of the main shaft 14. Specifically, the center of gravity G of the main shaft 14 is located outside of the base 12 (shown as below the base 12 in FIG. 1).

The tip 13 is a cylindrical body connected to the tip end of the base 12. That is, the tip 13 is formed having a cross section in a plane perpendicular to the axial direction of the main shaft 14 which has an outer edge that is the same round shape throughout and has the same dimensions throughout. Moreover, the tip 13 is formed having a cross section in a plane perpendicular to an axial direction of the main shaft 14 which has an outer edge that is smaller than or equal to a corresponding outer edge of the tip of the base 12. It is to be noted that, in the Drawings, the side surface of the tip 13 is shown having a tapered edge, but the edge may be left non-tapered, made to be curved, or made to be any other given shape.

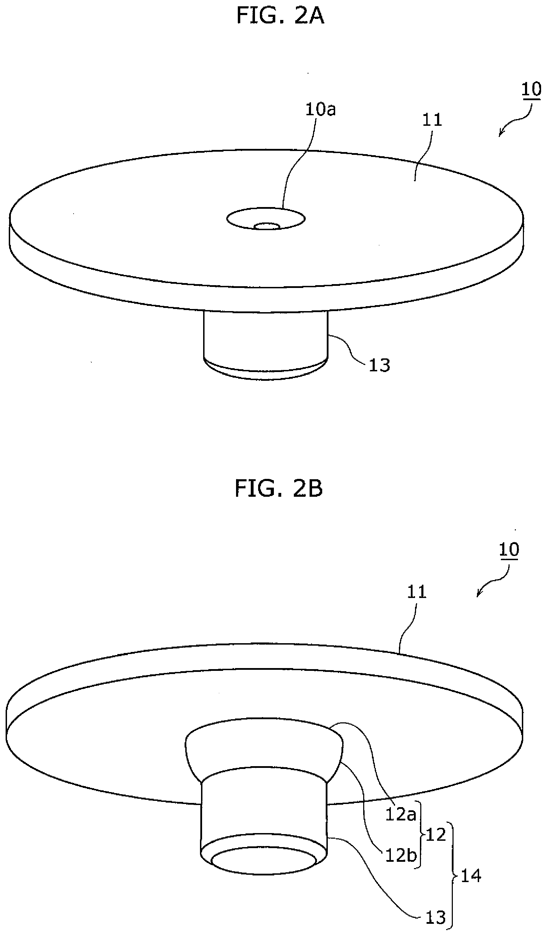

Next, the base 12 will be described in detail. FIG. 2A and FIG. 2B are perspective views illustrating the structure of the sealing plug 10 used in the first embodiment of the present invention. Specifically, FIG. 2A is a perspective view looking down at the sealing plug 10 from above the flange 11, and FIG. 2B is a perspective view looking up at the sealing plug 10 from below the tip 13.

As is shown in FIG. 1 and FIG. 2A, the center of the upper surface of the flange 11 is provided with a truncated cone-shaped indentation 10a which is used as a laser welding marker.

Moreover, as is shown in FIG. 1 and FIG. 2B, the base 12 is provided at an end of the main shaft 14 opposite the tip 13 and includes a thick portion 12a having, in a plane perpendicular to an axial direction of the main shaft 14, a cross section having the largest outer edge of the base 12. In the first embodiment, the thick portion 12a is provided at an interface of the flange 11 which is an end portion formed at the base end of the base 12, and has the largest diameter and cross section area in the main shaft 14. Moreover, when the sealing plug 10 plugs the through hole, the thick portion 12a is positioned at the rim of the through hole.

Moreover, the portion of the base 12 having the smallest diameter is formed at the end of the tip end of the base 12, at the interface with the tip 13. The base 12 has a side surface which substantially has the shape of a truncated cone with a curved surface.

In other words, the base 12 has a side surface portion 12b which has an outer edge which decreases in size from the thick portion 12a towards the tip 13. According to the first embodiment, along the entire surface of the side surface portion 12b, a rate of change in outer circumference of a cross section in a plane perpendicular to the axial direction of the main shaft 14 varies. In other words, the base 12 has an outer diameter which becomes smaller from the thick portion 12a near the flange 11 towards the tip 13 as the rate of change varies gradually. Consequently, the cross section of the base 12 in a plane including the central axis D has a curved contour, as is shown in FIG. 1.

Moreover, the outer diameter of the thick portion 12a is formed to have substantially the dimensions of the inner diameter of the through hole. It is to be noted that the outer diameter of the thick portion 12a may be formed to be slightly smaller than the inner diameter of the through hole, and so long as the thick portion 12a can be inserted into the through hole, may be formed to be bigger than the inner diameter of the through hole.

Moreover, the tip 13 is longer than the base 12 in the axial direction of the main shaft 14. Specifically, using the central axis D as a reference, the height of the tip 13 is approximately twice the height of the base 12.

Moreover, the radius of the thick portion 12a is shorter than a longest straight line connecting (i) a center of an end surface of the base 12 opposite the tip 13 or a center of an interface of the thick portion 12a and the side surface portion 12b, and (ii) a leading end surface of the tip13. According to the first embodiment, the radius of the thick portion 12a is shorter than the overall height of the main shaft 14, that is, shorter than the distance from the thick portion 12a to the tip end of the tip 13.

In this way, the sealing plug 10 used in the first embodiment is characterized by being provided with, as the main shaft 14, (i) the base 12 having a substantially truncated cone shape whose cross section has an outer edge which becomes smaller towards the tip, and (ii) the tip 13 at the tip end of the base 12.

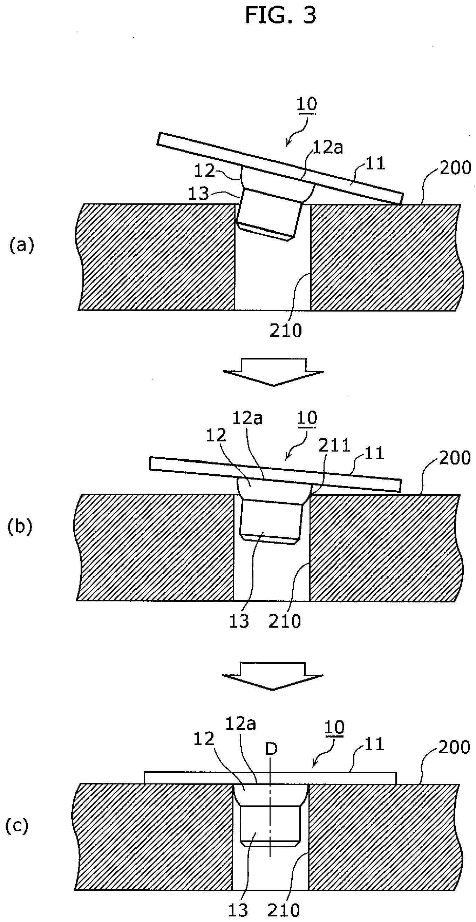

Hereinafter, the efficacy of the plugging, with the sealing plug 10, of the through hole 210 opened in the wall 200 of the metallic container holding a energy storage element such as a secondary battery, will be explained with reference to main component cross-sectional views shown in (a) through (c) in FIG. 3. FIG. 3 illustrates an advantageous result achieved by the sealing plug 10 used in the first embodiment of the present invention.

As is shown in (a) in FIG. 3, in the sealing plug 10, the thickness of the tip 13 is the same as the thinnest portion of the base 12. In other words, the tip 13 is thinner than the inner diameter of the through hole 210. For this reason, when the sealing plug 10 is held by hand or with a tool, the position of the tip 13 can be adjusted as it is inserted in the through hole 210, thereby preventing positional deviation of the base 12. Here, the through hole 210 is, for example, a fill hole for injecting the electrolyte into the container housing the energy storage element, and the sealing plug 10 is, for example, a fill plug for plugging the fill hole.

As is shown in (b) in FIG. 3, when the sealing plug 10 is inserted further deeper into the through hole 210, the side surface of the base 12 comes into contact with the rim 211, which is the edge of the opening of the through hole 210. Due to the curved surface of the base 12, the base 12 slips deep into the through hole 210 along the rim 211. Since, similar to the tip 13, the portion of the base 12 from the tip end to the base end has a diameter that is sufficiently smaller than the inner diameter of the through hole 210, the base 12 and the tip 13 can change position inside the through hole 210 while being inserted. For this reason, the sealing plug 10 is inserted until the base end of the base 12 having substantially the dimensions of the inner diameter of the through hole 210 engages the through hole 210, that is, until the thick portion 12a engages the through hole 210.

Finally, as is shown in (c) in FIG. 3, the base 12 is engaged with the through hole 210 with the thick portion 12a, whereby the flange 11 completely covers the through hole 210 and the provisional fixing of the sealing plug 10 in the through hole 210 is complete. The sealing plug 10 is maintained at a proper position in which the central axis D of the sealing plug 10 is parallel with the length of the through hole 210 when the provisional fixing is complete.

As described above, with the sealing plug 10 according to the present invention, the main shaft 14 is shaped such that the outer edge of a cross section of the main shaft 14 becomes smaller from the thick portion 12a of the base 12 to the tip 13. In other words, the main shaft 14 is provided with the base 12 having a substantially truncated cone shape with a curved side surface and the tip 13 extending from the base 12. This allows the main shaft 14 to be easily inserted into the through hole 210 and the sealing plug 10 to be provisionally fixed while maintaining a proper position. Consequently, the sealing plug 10 can be installed in the through hole 210 in a stable manner.

Moreover, the main shaft 14 is shaped such that the rate of change of the outer circumference thereof varies from the thick portion 12a towards the tip 13. In other words, the side surface of the base 12 is formed to have a curved surface. Consequently, contamination upon insertion of the main shaft 14 into the through hole 210 resulting from contact between the sealing plug 10 and the inside of the through hole 210 or the rim 211 can be inhibited.

Moreover, due to the flange 11 being exposed from the surface of the wall 200 when the sealing plug 10 seals the through hole 210, the sealing plug 10 can be easily inserted and stably installed in the through hole 210.

Moreover, due to the thick portion 12a, which has the largest outer edge, being positioned at the rim 211 of the through hole 210 when the main shaft 14 is inserted into the through hole 210, contact between the main shaft 14 and the rim 211 and contamination resulting therefrom can be reduced.

Moreover, due to the main shaft 14 being formed such that the tip 13 is longer than the base 12, the sealing plug 10 can rapidly assume its proper position upon insertion into the through hole 210.

Moreover, due to the length of the main shaft 14 being shorter than or equal to the through hole 210, the main shaft 14 will not protrude out from the bottom of the through hole 210, meaning the sealing plug 10 will not penetrate into the housing space beyond the wall 200.

Moreover, the radius of the thick portion 12a is shorter than a longest straight line connection (i) the center of the end surface of the base end of the base 12 or the center of the end of the thick portion 12a on the side surface portion side and (ii) the leading end surface of the tip 13. Specifically, in the sealing plug 10, the length of the main shaft 14 including the base 12 is longer than the radius of the thick portion 12a. For this reason, when the sealing plug 10 is inserted into the through hole 210, excessive tilting of the sealing plug 10 with respect to the length-wise direction of the through hole 210 can be prevented, and the sealing plug 10 can be restrained from rotating about its axis inside the through hole 210. Consequently, the sealing plug 10 can be inserted into the through hole 210 in a stabilized manner.

It is to be noted that in the preceding description, the position of the sealing plug 10 shown in (b) in FIG. 3 is that of the sealing plug 10 being held by hand or with a tool while being inserted. However, even if the sealing plug 10 is released in this position, the base 12 will settle down into the through hole 210 due to the weight of the tip 13, and the base end surrounding the base 12 will engage with the rim 211 after the side surface of the base 12 slides along the rim 211 of the through hole 210. Therefore the provisionally fixed state shown in (c) in FIG. 3 is the same as when the sealing plug 10 is inserted. As is shown in FIG. 1, since the center of gravity G of the main shaft 14 is closer to the tip 13 than the base 12 including the thick portion 12a (shown as further to the bottom in the Drawings), the sealing plug 10 can rapidly assume its proper position upon insertion into the through hole 210, which is preferable especially in this kind of situation.

In the above description, the radius of the thick portion 12a is shorter than the overall height of the main shaft 14, that is, shorter than the distance from the thick portion 12a to the tip end of the tip 13. However, as is shown in FIG. 1, as long as the radius of the thick portion 12a is shorter than the longest line (line L1) of the possible straight lines connecting the center of the thick portion 12a C1 and the tip end surface of the tip 13, sufficient control of tilt and rotation about the axis can be achieved.

Moreover, in the above description, the side surface portion 12b is formed having a curved surface whose rate of change in cross section circumference varies. However, the side surface portion 12b may be formed to have a surface whose rate of change in circumference is constant. In other words, the contour of a cross section of a plane including the central axis of the base 12 may be a sloped straight line. Even when this is the case, the advantageous result in which the main shaft 14 can be easily inserted into the through hole 210 and the sealing plug 10 can be installed in the through hole 210 in a stable manner can be achieved.

Moreover, the outer edge of a cross section of the base 12 and the tip 13 included in the main shaft 14 is not limited to a circular shape, but may be an elliptical shape or a rectangular shape.

### (Second Embodiment)

A sealing plug 20 used in the second embodiment of the present invention is characterized as the sealing plug 10 used in the first embodiment having a base with a thick portion having a cylindrical, thick side wall.

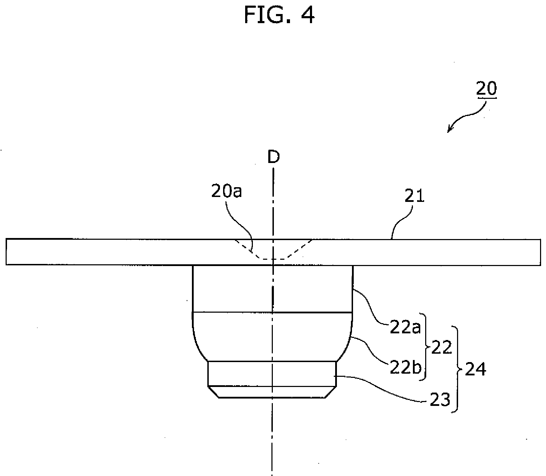

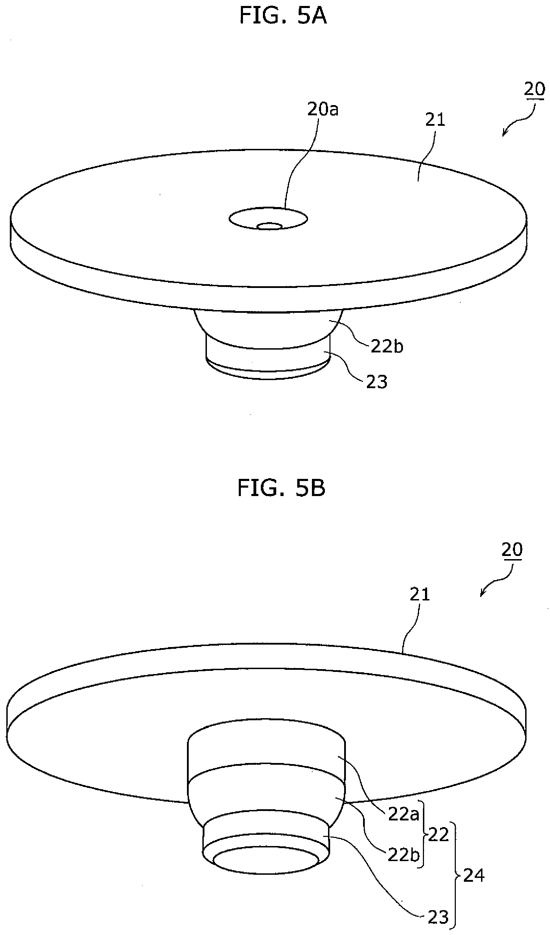

FIG. 4 is a side view illustrating the structure of a sealing plug 20 used in the second embodiment of the present invention, and FIG. 5A and FIG. 5B are perspective views illustrating the structure of the sealing plug 20 used in the second embodiment of the present invention. Specifically, FIG. 5A is a perspective view looking down at the sealing plug 20 from above a flange 21, and FIG. 5B is a perspective view looking up at the sealing plug 20 from below a tip 23.

As is shown in FIG. 4 and FIG. 5B, the sealing plug 20 is provided with the flange 21 having the same outer dimensions as the flange 11 according to the first embodiment, a base 22 having the same curved surface as the base 12, and the tip 23 which extends from the base 22.

Here, the thick portion 22a is formed having a cylindrical shape to the side of the base 22 near the flange 21, and the side surface portion 22b is formed having a curved surface to the side of the base 22 near the tip 23. In other words, the base 22 is formed having a structure which extends from the flange 21 to the thick portion 22a while maintaining a constant outer diameter, then gradually narrows in cross sectional area along the length of the side surface portion 22b to the tip 23.

In this way, the thick portion 22a is formed in a cylindrical shape extending from an end of the base 22 opposite the tip 23 to an end of the side surface portion 22b. Moreover, the outer edge of the portion of the base 22 between the end of the base 22 opposite the tip 23 and the end of the side surface portion 22b (that is, the outer edge of the thick portion 22a) corresponds to the inner shape of the through hole. In other words, the outer diameter of the thick portion 22a is designed to have substantially the dimensions of the inner diameter of the through hole. Moreover, the height of the thick portion 22a and the side surface portion 22b (height of a main shaft 24 in the axial direction) are substantially identical.

Moreover, as is shown in FIG. 4 and FIG. 5A, the center of the upper surface of the flange 21 is provided with a truncated cone-shaped indentation 20a similar to the indentation 10a according to the first embodiment.

Similar to the first embodiment, each component of the sealing plug 20 is made out of metal and forms a concentric circle when viewed from the central axis D parallel to the length of the through hole. The tip 23 has a cylindrical shape which extends while maintaining the cross sectional shape of the tip end of the base 22 and has a length which is shorter than that of the base 22.

Therefore, the main shaft 24 of the sealing plug 20 is thickest at the cylindrical shaped thick portion 22a of the base 22, gradually narrows along the side surface portion 22b, and is the narrowest at the end of the base 22 nearest the tip 23 and at the tip 23. It is to be noted that, in the Drawings, the side surface of the tip 23 is shown having a tapered edge, but the edge may be left non-tapered, made to be curved, or made to be any other given shape.

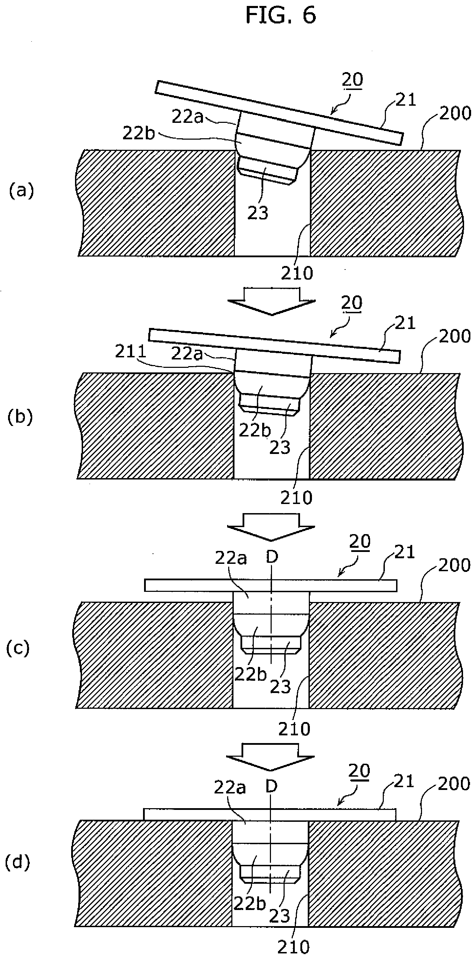

Hereinafter, the efficacy of the plugging, with the sealing plug 20, of the through hole 210 opened in the wall 200 of the metallic container holding a energy storage element such as a secondary battery, will be explained with reference to main component cross-sectional views shown in (a) through (d) in FIG. 6. FIG. 6 illustrates an advantageous result achieved by the sealing plug 20 used in the second embodiment of the present invention.

As is shown in (a) in FIG. 6, the position of the tip 23 and the tip end of the base 22, which are sufficiently narrower than the inner diameter of the through hole 210, can be adjusted when the sealing plug 20 is inserted in the through hole 210. Here, the through hole 210 is, for example, a fill hole for injecting the electrolyte into the container housing the energy storage element, and the sealing plug 20 is, for example, a fill plug for plugging the fill hole.

As is shown in (b) in FIG. 6, when the sealing plug 20 is further inserted into the through hole 210, the side surface portion 22b of the base 22 comes in contact with the rim 211 which is the edge of the opening of the through hole 210, and the base 22 slips deep into the through hole 210 as the side surface portion 22b slides on the rim 211, similar to the sealing plug 10 according to the first embodiment.

As is shown in (c) in FIG. 6, as the sealing plug 20 is inserted further into the through hole 210, the thick portion 22a, which has substantially the same thickness as the inner diameter of the through hole 210, engages with the through hole 210, at which time the central axis D of the sealing plug 20 becomes parallel with the length of the through hole 210, whereby the sealing plug 20 assumes its stabilized proper position. It is to be noted that the outer diameter of the thick portion 22a may be formed to be slightly smaller than the inner diameter of the through hole 210, and so long as the thick portion 22a can be inserted into the through hole 210, may be formed to be bigger than the inner diameter of the through hole.

As is shown in (d) in FIG. 6, when the sealing plug 20 is further inserted into the through hole 210, the sealing plug 20 settles into the through hole 210 while maintaining its proper position as the surface of the thick portion 22a and the inner wall of the through hole 210 are in contact. The flange 21 then comes into contact with the surface of the wall 200, thereby covering the through hole 210 and completing the provisional fixing of the sealing plug 20 into the through hole 210.

In this way, similar to the first embodiment, by providing the sealing plug 20 according to the second embodiment with the base 22 and the tip 23 as the main shaft 24, the sealing plug 20 can be installed in a stable manner while keeping its proper position.

Furthermore, according to the second embodiment, the base 22 is formed from the cylindrical shaped thick portion 22a and the side surface portion 22b, and the outer shape of the thick portion 22a is formed to correspond to the inner shape of the through hole 210. This allows for the sealing plug 20 to be more securely provisionally fixed in the through hole 210 due to the thick portion 22a engaging with the through hole 210.

The merits thereof are as follows. The provisionally fixed sealing plug engaged with the through hole is completely fixed to the container by laser welding. However, when high-output laser welding is performed, there is concern that evaporation from the container, sealing plug, or filler material fused as a result of exposure to laser light will cause the sealing plug to jut out from the through hole, for example, thereby changing the position of the sealing plug from the provisionally fixed position, or further separate from the through hole. In conventional processes, the output is set low when fixing the sealing plug to the container by laser welding in an effort to avoid this problem. In other words, a temporary fixing process is required.

However, since the thick portion 22a of the sealing plug 20 according to the second embodiment is engaged with the through hole 210, the position at the time of provisional fixing can be maintained even under high-output laser welding. As a result, the process of temporarily fixing the sealing plug 20 can be omitted, thereby improving battery manufacturability. It is to be noted that in the above description, the length of the thick portion 22a and the side surface portion 22b with respect to the center line D are substantially identical, but their lengths may be uneven. However, forming both to have substantially identical lengths is preferable for its provisional fixing stability and through hole engaging advantages.

Moreover, in the above description, the thick portion 22a has a cylindrical shape and has a constant cross sectional shape throughout with respect to the central axis D. However, the structure of the thick portion 22a is not limited to this example, and may have a cross sectional shape which corresponds with a cross section perpendicular to the length-wise direction of the through hole 210. In other words, instead of a circular shape, if the cross sectional shape of the through hole 210 is an elliptical, oval, or polygonal shape, the thick portion 22a may be made to have a corresponding cross sectional shape.

When the cross sectional shape of the through hole 210 is elliptical or oval in particular, the side surface portion 22b in addition to the thick portion 22a of the base 22 may also be made to have a cross sectional shape which corresponds with the through hole 210. Moreover, the tip 23 may also be made to have a cross sectional shape which corresponds with the through hole 210. A variation of the cross sectional shape of the base 22 and the tip 23 may be applied to the sealing plug 10 used in the first embodiment as well as the sealing plug 20 used in the second embodiment.

### (First Variation)

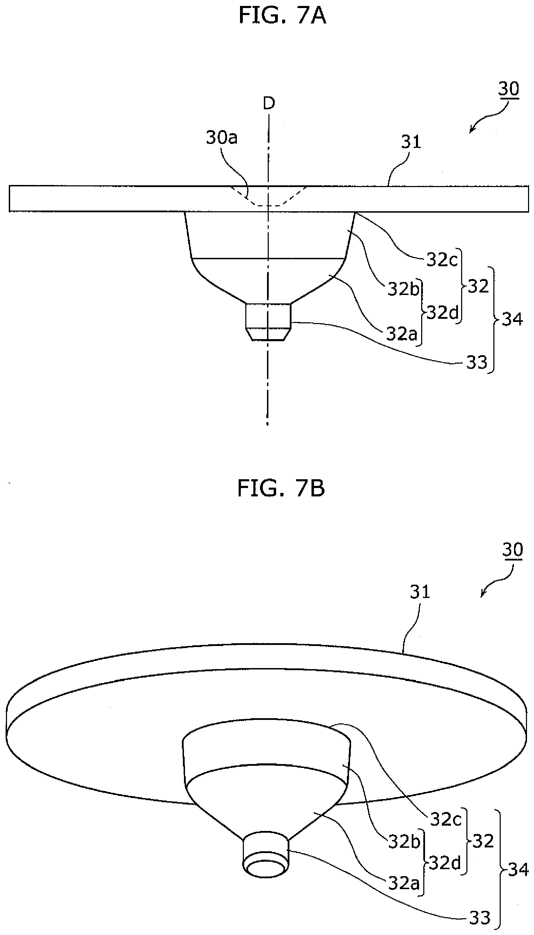

When the cross sectional shape of the through hole 210 is not constant throughout, the base can be formed to have a varying cross sectional shape which corresponds to the through hole 210. This kind of structure is also intended to be included in the present invention. An example of such a structure is shown in FIG. 7A and FIG. 7B. FIG. 7A is a side view illustrating the structure of a sealing plug 30 used in the first variation of an embodiment of the present invention, and FIG. 7B is a perspective view illustrating the structure of the sealing plug 30 used in the first variation of an embodiment of the present invention.

The sealing plug 30 shown in the side view of FIG. 7A and the perspective view of FIG. 7B is a variation of the sealing plug 10 according to the first embodiment. Similar to the sealing plug 10, in the sealing plug 30, a main shaft 34 is provided with a base 32 which includes a side surface portion 32d and a thick portion 32c formed at an interface of a flange 31.

The side surface portion 32d is provided with a curved surface 32a formed on the side nearest a tip 33 which is similar to the curved surface of the side surface portion 12b of the sealing plug 10, and a tapered surface 32b formed on the side nearest the thick portion 32c.

In other words, similar to the sealing plug 10, the base 32 has a cross section in a plane perpendicular to the central axis D having an area which is the smallest at the interface of the base 32 and the tip 33, and largest in the thick portion 32c at the interface of the base 32 and the flange 31 However, the curved surface 32a and the tapered surface 32b of the base 32 differ in how the outer diameter with respect to the central axis D (length-wise direction) changes.

In other words, the curved surface 32a has an outer diameter whose rate of change with respect to the position along the central axis D varies. As is shown in FIG. 7A, the outline of the curved surface 32a is a curved line In contrast, the tapered surface 32b has an outer diameter whose rate of change with respect to the position along the central axis D is constant. As is shown in FIG. 7A, the outline of the tapered surface 32b is a straight line.

On the other hand, the dimensions and shape of the flange 31 are the same as those of the flange 11 of the sealing plug 10 and the flange 21 of the sealing plug 20 according to the first and second embodiments, respectively, and the characteristic features (curved surface and cylindrical shape) of the outer shapes of each of the base 32 and the tip 33 are the same as the base 12 and the tip 13 of the sealing plug 10 and the base 22 and the tip 23 of the sealing plug 20.

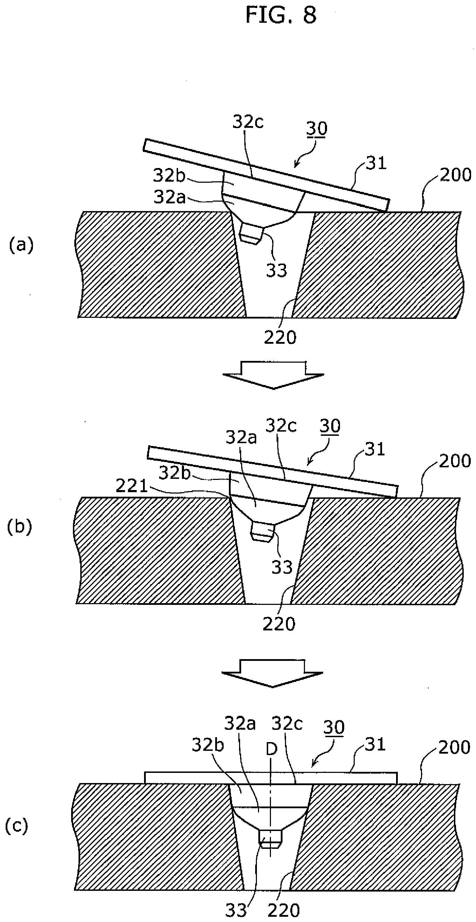

As shown in (a) through (c) in FIG. 8, the sealing plug 30 having the above-described structure is a preferable structure for a through hole 220 having a tapered cross section. FIG. 8 illustrates an advantageous result achieved by the sealing plug 30 according to the first variation of an embodiment of the present invention.

As is shown in FIG. 8, the tip 33 of the sealing plug 30 is inserted into the through hole 220 the same as with the first and second embodiments described above. Here, the through hole 220 is, for example, a fill hole for injecting the electrolyte into the container housing the energy storage element, and the sealing plug 30 is, for example, a fill plug for plugging the fill hole. Next, the curved surface 32a of the base 32 first comes into contact with a rim 221 of the through hole 220, then the tapered surface 32b engages with the through hole 220. As a result, the sealing plug 30 is provisionally fixed in the through hole 220 while assuming a proper position, that is, while the central axis D is parallel to the length-wise direction of the through hole 220.

Accordingly, the structure of the base 32 may take on any given shape as long as the shape corresponds with the shape of the through hole 220 which the sealing plug 30 seals. The present invention is therefore advantageous in that it can be applied to through holes of various shapes.

In the first and second embodiments, the whole surface of the side surface portion 12b of the base 12 as well as the side surface portion 22b of the base 22 is a curved surface having an outer diameter whose rate of change with respect to the position along the central axis D varies. In contrast, in the first variation, a portion of the side surface portion 32d is formed as a tapered surface having a constant rate of change with respect to position along the central axis D.

### (Second Variation)

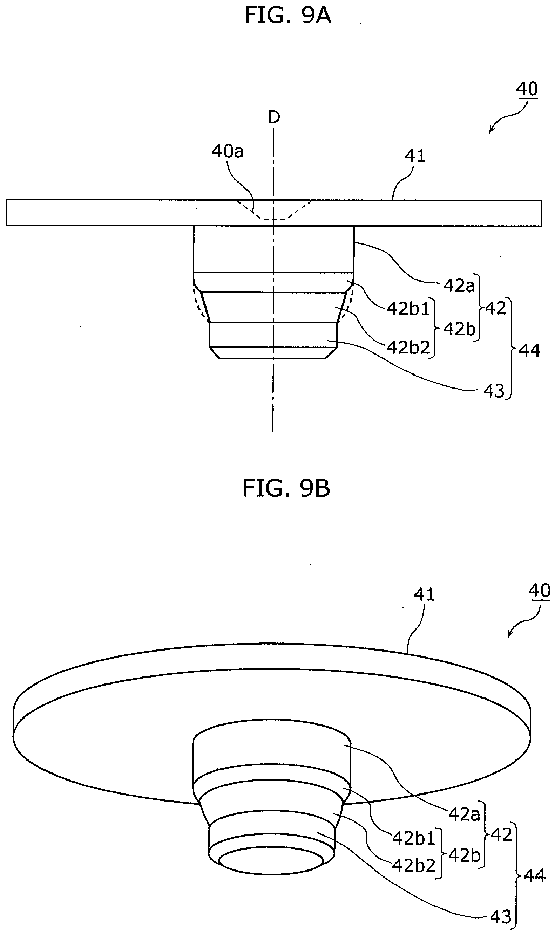

FIG. 9A and FIG. 9B show yet another variation. FIG. 9A is a side view illustrating the structure of a sealing plug 40 used in the second variation of an embodiment of the present invention, and FIG. 9B is a perspective view illustrating the structure of the sealing plug 40 used in the second variation of an embodiment of the present invention.

The sealing plug 40 shown in the side view of FIG. 9A and the perspective view of FIG. 9B is a variation of the sealing plug 20 according to the second embodiment. Similar to the sealing plug 20, in the sealing plug 40, a main shaft 44 is provided with a base 42 which includes a side surface portion 42b and a cylindrical thick portion 42a formed at an interface of a flange 41.

The side surface portion 42b is provided with a curved surface 42b1 formed on the side nearest the thick portion 42a, and a tapered surface 42b2 formed on the side nearest a tip 43. The curved surface 42b1 is a curved surface that is thickest at the end nearest the thick portion 42a, and thinnest at the end nearest the tapered surface 42b2. In other words, in at least a portion of the side surface portion 42b, a rate of change in outer circumference of a cross section in a plane perpendicular to the axial direction of the main shaft 44 varies.

Consequently, the outer diameter of the base 42 gradually narrows from the curved surface 42b1 to the tapered surface 42b2, and similar to the second embodiment, the tip 43 and the base 42 maintain dimensions which allow them to be adjusted inside the through hole upon insertion. It is to be noted that in the Drawings, the outline of the base 22 according to the second embodiment is drawn with a dashed line for comparison.

The portion of the side surface portion 42b of the base 42 nearest the flange 41, which is the portion of the side surface portion 42b which has the largest diameter, is the portion which is most likely to come in contact with the rim of the through hole when the sealing plug 40 is placed in the through hole, similar to the base 22 according to the second embodiment as shown in (a) and (b) of FIG. 6, for example. As a result of the base 42 being formed having a curved surface (that is, the rate of change in the outer diameter varies) in at least this portion, contamination from contact can be reduced and the tip 43 and the base 42 can be smoothly inserted into the through hole.

It is to be noted that the sealing plug 40 including the base 42 is based on the sealing plug 20 according to the second embodiment, but the variation may be applied to the sealing plug 10 according to the first embodiment as well. Moreover, in the above description, the curved surface 42b1 is formed to the side nearest the thick portion 42a and the tapered surface 42b2 is formed to the side nearest the tip 43, but the relationship between the curved surface and the tapered surface can be reversed. Moreover, similar to the first and second embodiments, the side surface of the tip 43 is shown in the Drawings as having a tapered edge, but the edge may be left non-tapered, made to be curved, or made to be any other given shape.

As described above, the base 42 is acceptable as long as it includes the thick portion 42a and the curved surface 42b1, but the base 42 is not limited to a specific aspect of the curved surface 42b1. Moreover, in the above description, the change in the curvature of the curved surface 42b1 is based on the variation in the outer diameter of the base 42, that is, based on the fact that the base 42 has a circular cross sectional shape in a plane perpendicular to the length-wise direction of the through hole. However, when the is elliptical, oval, or any other given shape, may be based on the variation in circumference (Third Variation)

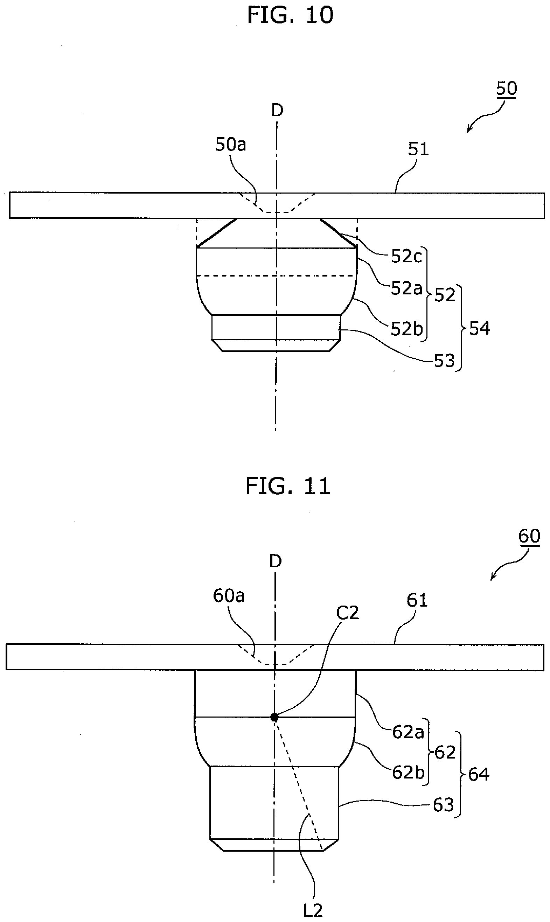

Moreover, in the first and second embodiments, the flange and the base are directly connected to each other via the thick portion, but the structure is not limited thereto. FIG. 10 is a side view illustrating the structure of a sealing plug 50 used in the third variation of an embodiment of the present invention.

As is shown in FIG. 10, the sealing plug 50 is provided with a base 52 and a tip 53, and the base 52 is provided with a thick portion 52a and two side surface portions, a side surface portion 52b and a side surface portion 52c. Here, the side surface portion 52b has the same structure as the side surface portion 22b according to the second embodiment, and the side surface portion 52c is provided directly below a flange 51 and has the shape of a truncated cone.

The side surface portion 52c has an outer edge (cross sectional area) in a plane parallel to the axial direction of a main shaft 54 that is smaller than that of the thick portion 52a. It is to be noted that in FIG. 10, the outline of the thick portion 22a according to the second embodiment is drawn with a dashed line for comparison. It is to be noted that the side surface portion 52c is formed between the flange 51 and the thick portion 52a and has a cross sectional area that is less than a cross sectional area of the thick portion 52a.

In other words, the base 52 has a side surface formed between the end of the base 52 opposite the tip 53 and the thick portion 52a, the side surface having, in a plane perpendicular to the axial direction of the main shaft 54, a cross section having an outer edge that is smaller than a corresponding outer edge of the thick portion 52a.

With the structure described above, the position of the tip 53 and the base 52 included in the main shaft 54 can be adjusted inside the through hole upon insertion. Moreover, engagement with the through hole can be achieved due to the inclusion of the thick portion 52a in the base 52, and the same advantageous results as the second embodiment can be achieved due to the use of the side surface portion 52b and the tip 53.

### (Fourth Variation)

In the second embodiment, the length of the tip 23 is shorter than the length of the base 22, but is not limited thereto. FIG. 11 is a side view illustrating the structure of a sealing plug 60 according to the fourth variation of an embodiment of the present invention.

As is shown in FIG. 11, similar to the first embodiment, the sealing plug 60 may be provided with a tip 63 which is longer than a side surface portion 62b of a base 62. In this case as well, by placing the center of gravity G of a main shaft 64 lower than the base 62 including a thick portion 62a, the sealing plug 60 can rapidly assume its proper position.

Furthermore, similar to the first embodiment, it is preferable that the radius of the thick portion 62a is made to be shorter than the overall length of the main shaft 64. In other words, as long as the radius of the thick portion 62a is shorter than the longest line (line L2) of the possible straight lines connecting the center C2 of the bottom surface of the thick portion 62a that is nearest the side surface portion 62b and the tip end surface of the tip 63, sufficient control of tilt and rotation about the axis can be achieved. It is to be noted that FIG. 11 is not intended to be limiting. As long as the thick portion is made to have thickness in the length-wise direction, such as is the case in the sealing plug 20 according to the second embodiment, sufficient control of tilt and rotation about the axis can be achieved as a result of constant placement of the center of gravity near the tip.

In this way, it is preferable that the radius of the thick portion 62a is shorter than a longest straight line connecting (i) a center of an end surface of the base 62 opposite the tip 63 or a center of an interface of the thick portion 62a and the side surface portion 62b, and (ii) an leading end surface of the tip 63.

### (Fifth Variation)

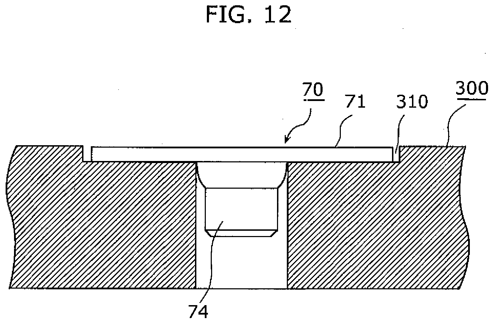

In the first and second embodiments, as well as the above variations, when the sealing plug seals the through hole, the flange is positioned such that it sits on the surface of the wall and is exposed from the wall, but is not limited thereto. FIG. 12 is a side view illustrating the structure of a sealing plug 70 used in the fifth variation of an embodiment of the present invention.

As is shown in FIG. 12, a through hole 310 is formed recessed into a wall 300. In other words, the through hole 310 includes a portion with a large diameter into which a flange 71 is inserted, and a small portion into which a main shaft 74 is inserted, resulting in the entire body of the sealing plug 70 being positioned inside the through hole 310. With this, when the sealing plug 70 seals the through hole 310, the flange 11 is not exposed from the wall 300, but is positioned within the through hole 310.

The same advantageous effects of the first embodiment can also be achieved with the above-described structure. It is to be noted that in FIG. 12, the sealing plug 70 is shown as the sealing plug 10 according to the first embodiment, but the sealing plug used in the first or second embodiment, or any of the above variations, may be used as the sealing plug 70.

### (Sixth Variation)

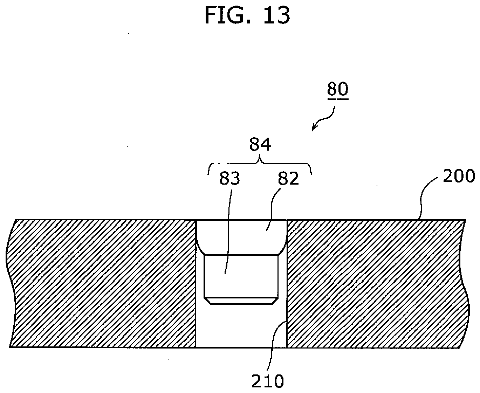

In the first and second embodiments, as well as the above variations, the sealing plug is provided with a flange, but the sealing plug is not required to have a flange. FIG. 13 is a side view illustrating the structure of a sealing plug 80 used in the sixth variation of an embodiment of the present invention. As is shown in FIG. 13, the sealing plug 80 is not provided with a flange. The sealing plug is provided with a main shaft 84 which includes a base 82 and a tip 83. A through hole 210 is sealed with the main shaft 84.

The same advantageous effects of the first embodiment can also be achieved with the above-described structure. It is to be noted that the shape of the main shaft according to the first or second embodiment, or any of the above variations, may be used as the shape of the sealing plug 80.

### (Seventh Variation)

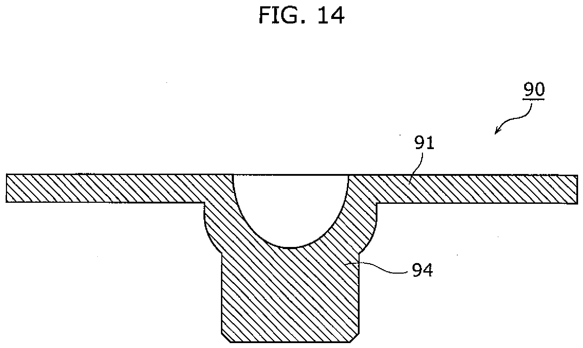

In the first and second embodiments, as well as the above variations, the sealing plug is provided with a cylindrical main shaft and a disk shaped flange, but the sealing plug may be formed having a hollow core. FIG. 14 is a side view illustrating the structure of a sealing plug 90 according to the seventh variation of an embodiment of the present invention. As is shown in FIG. 14, in the sealing plug 90, a flange 91 is formed having a through hole, and a main shaft 94 is formed having an indentation.

It is to be noted that the shape of the hollowed portion formed in the sealing plug 90 is not limited to this example. For example, the sealing plug 90 may be formed having an indentation or through hole in only the main shaft 94 instead of the through hole being formed in the flange 91.

The same advantageous effects of the first embodiment can also be achieved with the above-described structure. It is to be noted that the shape of the sealing plug according to the first or second embodiment, or any of the above variations, may be used as the shape of the sealing plug 90.

In other words, so long as the sealing plug according to the present invention is provided with a main shaft having a base and a tip with an outer edge that is smaller than or equal to the outer edge of the base, and the base includes a thick portion having the largest outer edge and a side surface portion whose outer edge decreases in size in a direction towards the tip, the advantageous effects thereof can be achieved, and the sealing plug is not limited by structural details of other members or portions.

### (Third embodiment)

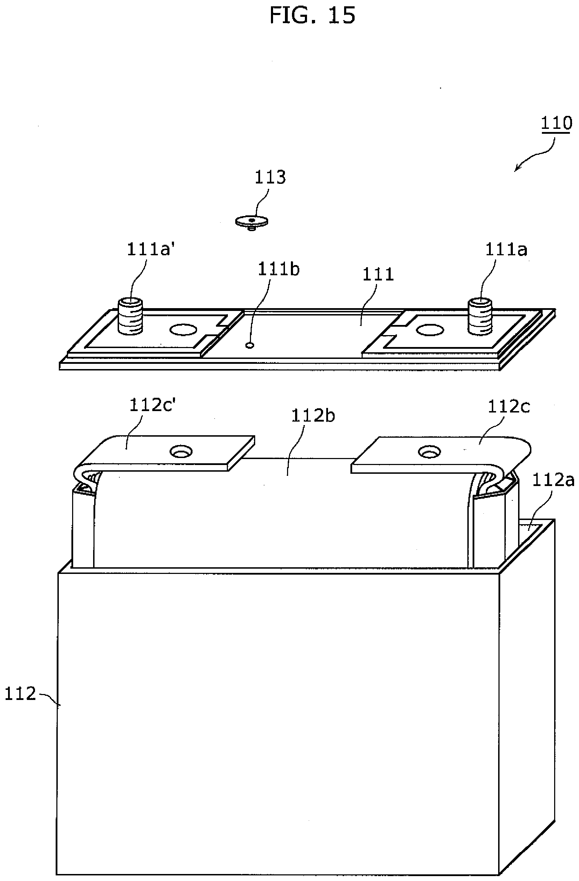

FIG. 15 is an exploded perspective view illustrating a typical structure of a non-aqueous electrolyte secondary battery according to the third embodiment of the present invention which uses a sealing plug.

As is shown in FIG. 15, a non-aqueous electrolyte secondary battery 110 according to the third embodiment of the present invention is an example of an energy storage element provided with a battery case, which includes a box-shaped container 112 having an opening 112a and a plate shaped cover 111 made of aluminum, and an electrode assembly 112d housed therein.

The electrode assembly 112b housed inside the container 112 is an electrode assembly including, wound into an oblong shape, a belt shaped positive electrode, a belt shaped negative electrode, and a separator interposed between the positive electrode and the negative electrode. In the wound state, the positive electrode and the negative electrode are positioned in different directions along the axial direction of the winding, and the ends of the positive electrode and the negative electrode are positioned at respective ends of the electrode assembly 112b. Furthermore, an active material is not coated at the ends of each electrode, where the metallic foil base material is exposed. Conductive metal plate current collectors 112c and 112c' positioned at corresponding positive and negative electrode sides are connected to the metallic foil protruding out from each end of the electrode assembly 112b.

Moreover, positive and negative electrode terminals 111a and 111a' to which an external load can be detachably attached are provided on the surface of the cover 111 and electrically and mechanically connected to the electrode assembly 112b. Furthermore, a through hole 111b is opened in the surface of the cover 111 which corresponds to the through hole 210 according to the first embodiment or the through hole 220 according to the second embodiment.

The non-aqueous electrolyte secondary battery 110 is assembled as described below. The electrode terminals 111a and 111a' are fixed to the surface of the cover 111, and the current collectors 112c and 112c' are connected to the electrode terminals 111a and 111a', respectively, from the underside of the cover 111 via a conductive connecting material (not shown in the Drawings), whereby the cover 111 and the electrode assembly 112b are assembled as one. Next, the electrode assembly 112b is inserted into the opening 112a, and the container 112 is covered with the cover 111. The battery case is then completed by welding the joining areas.

Next, an electrolyte is injected into the container 112 via the through hole 111b, and after a formation process is performed by running electricity through the electrode terminals 111a and 111a', the through hole 111b is sealed with a sealing plug 113, thereby completing the assembly of the non-aqueous electrolyte secondary battery 110. It is to be noted that, similar to the battery case, the sealing plug 113 is made of aluminum, but it is preferable that the sealing plug 113 be made of a material that is softer than the battery case.

Manufacturability of the above-described non-aqueous electrolyte secondary battery 110 is improved as a result of the increased efficiency of the manufacturing processes relating to the sealing plug when the sealing plug according to the present invention exemplified by the sealing plugs 10 through 90 according to the first and second embodiments, is used as the sealing plug 113.

It is to be noted that, in the above descriptions, the through hole is provided in a wall which is the cover 111, but the through hole may be provided in a wall on the side of the container 112. The through hole can be formed flexibly according to the design of the battery.

It is to be noted that, in the above descriptions, the non-aqueous electrolyte secondary battery 110 as typified by the lithium-ion secondary battery is presented for exemplary purposes as the energy storage element. As long as the battery is a battery capable of being recharged via electrochemical reaction, any other type of secondary battery such as a nickel hydride battery may be used. Moreover, the non-aqueous electrolyte secondary battery 110 may be a primary battery. Furthermore, the non-aqueous electrolyte secondary battery 110 may be an element which directly stores electricity as a charge, such as an electric double layer capacitor. In other words, as long as the energy storage element according to the present invention is an element capable of storing electricity, it is not limited to a specific means.

Moreover, in the above descriptions, the housing provided with the sealing plug 113 is an energy storage element battery case including the cover 111 and the container 112. However, the housing may be used to store a liquid such as fuel or a chemical, or a powder substance. In other words, the housing is not limited by the application, quality of material, or shape thereof, and so as long as the housing includes a wall in which a through hole is formed and sealed with a sealing plug, the housing may be a hermetically sealed housing, a housing having an opening, or a housing having a flat or rounded plate-shaped portion.

Moreover, in the first and second embodiments, the sealing plug is made of aluminum, but may be made of an aluminum alloy, copper, stainless steel, or any other metal or compound metal. Furthermore, the sealing plug is not limited by the material it is made of. For instance, the sealing plug may be ceramic or constructed of a plastic material. Moreover, the sealing plug may be made of a different material than the wall in which the through hole is provided.

Although only some exemplary embodiments of the present invention have been described in detail above, those skilled in the art will readily appreciate that many modifications are possible in the exemplary embodiments without materially departing from the novel teachings and advantages of the present invention. Accordingly, all such modifications are intended to be included within the scope of the present invention.

### Industrial Applicability

The present invention is applicable as a sealing plug capable of being installed in a container in a stable manner, or as an energy storage element such as a non-aqueous electrolyte secondary battery which uses such a sealing plug.

### Reference Signs List

- 10, 20, 30, 40, 50, 60, 70, 80, 90, 100, 113: sealing plug
- 10a, 20a, 30a, 40a, 50a, 60a,: indentation
- 11, 21, 31, 41, 51, 61, 71, 91, 101: flange
- 12, 22, 32, 42, 52, 62, 82, 102: base
- 13, 23, 33, 43, 53, 63, 83: tip
- 14, 24, 34, 44, 54, 64, 74, 84, 94: main shaft
- 12a, 22a, 32c, 42a, 52a, 62a,: thick portion
- 12b, 22b, 32d, 42b, 52b, 52c, 62b: side surface portion
- 32a, 42b1, 103: curved surface
- 32b, 42b2,: tapered surface
- 110: non-aqueous electrolyte secondary battery
- 111: cover
- 111b, 210, 220, 310: through hole
- 112: container
- 112b: electrode assembly
- 200, 300: wall
- 211, 221: rim

## Claims

1. An energy storage element (110) comprising:
a container (112) having an opening (112a);
a cover (111) which covers the opening (112a);
an electrode assembly (112b) housed in the container (112); and
a sealing plug (10; 20; 30; 40; 50; 60; 70; 80; 90; 113)which seals a through hole (210; 220; 111b) formed in a wall of the cover (111) or in a wall of the containter (112), the sealing plug (10; 20; 30; 40; 50; 60; 70; 80; 90; 113) including
a main shaft (14; 24; 34; 44; 54; 64; 74; 84; 94) which is placeable in the through hole (210; 220; 111b),
wherein the main shaft (14; 24; 34; 44; 54; 64; 74; 84; 94) includes:
a base (12, 22, 32; 42; 52; 62; 82); and
a tip (13; 23; 33; 43; 53; 63; 83) connected to a leading end of the base (12, 22, 32; 42; 52; 62; 82) and having a cross section having an outer edge that is smaller than or equal to an outer edge of a cross section of the leading end of the base (12, 22, 32; 42; 52; 62; 82), the cross sections each being in a plane perpendicular to an axial direction of the main shaft (14; 24; 34; 44; 54; 64; 74; 84; 94), and
the base (12, 22, 32; 42; 52; 62; 82) includes:
a thick portion (12a; 22a; 32c; 42a; 52a; 62a) having, in a plane perpendicular to the axial direction of the main shaft (14; 24; 34; 44; 54; 64; 74; 84; 94), a cross section having a largest outer edge; and
a curved side surface portion (12b; 22b; 32d; 42b; 52b; 62b) having a cross section outer edge which decreases in size from the thick portion (12a; 22a; 32c; 42a; 52a; 62a) towards the tip (13; 23; 33; 43; 53; 63; 83).

2. The energy storage element (110) according to Claim 1,
wherein the thick portion (12a; 22a; 32c; 42a; 52a; 62a) is provided at an end of the base (12, 22, 32; 42; 52; 62; 82) opposite the tip (13; 23; 33; 43; 53; 63; 83) and positioned at a rim of the through hole (210; 220; 111b) when the sealing plug (10; 20; 30; 40; 50; 60; 70; 80; 90; 113) seals the through hole (210; 220; 111b).

3. The energy storage element (110) according to Claim 1 or Claim 2,
wherein the thick portion (22a) is formed in a cylindrical shape extending from an end of the base (22) opposite the tip (23) to an end of the side surface portion (22b).

4. The energy storage element (110) according to any one of Claim 1 to Claim 3,
wherein along at least a portion of the curved side surface portion (32d), a rate of change in outer circumference of a cross section in a plane perpendicular to the axial direction of the main shaft (34) varies.

5. The energy storage element (110) according to any one of Claim 1 to Claim 4, further comprising
an exposed portion (11; 21; 31; 41; 51; 61; 71; 91) connected to an end of the base (12, 22, 32; 42; 52; 62; 82) opposite the tip (13; 23; 33; 43; 53; 63; 83) and positioned, when the sealing plug (10; 20; 30; 40; 50; 60; 70; 80; 90; 113) seals the through hole (210; 220; 111b), on a surface of the wall so as to be exposed from the wall.

6. The energy storage element (110) according to any one of Claim 1 to Claim 5,
wherein an outer shape of a portion of the base (12, 22, 32; 42; 52; 62; 82) between an end of the base (12, 22, 32; 42; 52; 62; 82) opposite the tip (13; 23; 33; 43; 53; 63; 83) and an end of the side surface portion (12b; 22b; 32d; 42b; 52b; 62b) corresponds to an inner shape of the through hole (210; 220; 111b).

7. The energy storage element (110) according to any one of Claim 1 to Claim 6,
wherein a distance from a leading end of the tip (13; 23; 33; 43; 53; 63; 83) to the base (12, 22, 32; 42; 52; 62; 82) is greater than a distance from the leading end of the tip (13; 23; 33; 43; 53; 63; 83) to a center of gravity of the main shaft (14; 24; 34; 44; 54; 64; 74; 84; 94).

8. The energy storage element (110) according to any one of Claim 1 to Claim 7,
wherein the tip (13; 23; 33; 43; 53; 63; 83) is longer than the base (12; 22; 32; 42; 52; 62; 82)in the axial direction of the main shaft (14; 24; 34; 44; 54; 64; 74; 84; 94).

9. The energy storage element (110) according to any one of Claim 1 to Claim 8,
wherein when the sealing plug (10; 20; 30; 40; 50; 60; 70; 80; 90; 113) seals the through hole (210; 220; 111b), a length of the main shaft (14; 24; 34; 44; 54; 64; 74; 84; 94) in the axial direction is less than or equal to a length of the through hole (210; 22; 111b) in the axial direction.

10. The energy storage element (110) according to any one of Claim 1 to Claim 9,
wherein a radius of the thick portion (12a; 22a; 32c; 42a; 52a; 62a) is shorter than a longest straight line connecting (i) a center of an end surface of the base (12; 22; 32; 42; 52; 62; 82) opposite the tip (13; 23; 33; 43; 53; 63; 83) or a center of an interface of the thick portion (12a; 22; 32c; 42a; 52; 62a) and the side surface portion (12b; 22b; 32d; 42b; 52b; 62b), and (ii) a leading end surface of the tip (13; 23; 33; 43; 53; 53; 83).

11. The energy storage element (110) according to any one of Claim 1 and Claim 3 to Claim 10,
wherein the base (52) has a side surface portion (52c) formed between an end of the base (12; 22; 32; 42; 52; 62; 82) opposite the tip (13; 23; 33; 43; 52; 63; 83) and the thick portion (12a; 22a; 32c; 42a; 52a; 62a), and formed to have a cross section having an outer edge that is smaller than an outer edge of a cross section of the thick portion (12a; 22a; 32c; 42a; 52a; 62a), the cross sections each being in a plane perpendicular to the axial direction of the main shaft (14; 24; 34; 44; 54; 64; 74; 84; 94).

## Patentansprüche

1. Energiespeicherelement (110), umfassend:
einen Behälter (112) mit einer Öffnung (112a),
eine Abdeckung (111), welche die Öffnung (112a) abdeckt,
eine in dem Behälter (112) aufenommene Elektrodenanordnung (112b) und
einen Verschlussstopfen (10; 20; 30; 40; 50; 60; 70; 80; 90, 113), der ein in einer Wand der Abdeckung (111) oder in einer Wand des Behälters (112) gebildetes
Durchgangsloch (210; 220; 111b) verschließt, wobei der Verschlussstopfen (10; 20; 30; 40; 50; 60; 70; 80; 90; 113) Folgendes aufweist:
einen Hauptschaft (14; 24; 34; 44; 54; 64; 74; 84; 94), der in das Durchgangsloch (210; 220; 111b) eingebracht werden kann,
wobei der Hauptschaft (14, 24; 34; 44; 54; 64; 74; 84; 94) Folgendes aufweist:
einen Sockel (12, 22, 32; 42; 52; 62; 82) und
eine Spitze (13; 23; 33; 43; 53; 63; 83), die mit einem Vorderende des Sockels (12, 22, 32; 42; 52; 62; 82) verbunden ist und einen Querschnitt mit einer Außenkante aufweist, der kleiner oder gleich einem Querschnitt mit einer Außenkante des Vorderendes des Sockels (12, 22, 32; 42; 52; 62; 82) ist, wobei die Querschnitte sich jeweils in einer Ebene senkrecht zu einer axialen Richtung des Hauptschafts (14; 24; 34; 44; 54; 64; 74; 84; 94) erstrecken, und
wobei der Sockel (12, 22, 32; 42; 52; 62; 82) Folgendes aufweist:
einen verdickten Abschnitt (12a; 22a; 32c; 42a; 52a; 62a), der in einer Ebene senkrecht zur axialen Richtung des Hauptschafts (14; 24; 34; 44; 54; 64; 74; 84; 94), einen Querschnitt mit einer größten Außenkante aufweist, und
einen gebogenen Seitenflächenabschnitt (12b; 22b; 32d; 42b; 52b; 62b), der einen Querschnitt mit einer Außenkante aufweist, der in der Größe von dem verdickten Abschnitt (12a; 22a; 32c; 42a; 52a; 62a) zur Spitze (13; 23, 33, 43; 53; 63; 83) abnimmt.

2. Energiespeicherelement (110) nach Anspruch 1,
wobei der verdickte Abschnitt (12a; 22a; 32c; 42a; 52a; 62a) an einem Ende des Sockels (12, 22, 32; 42; 52; 62; 82) entgegengesetzt zur Spitze (13; 23; 33; 43; 53; 63; 83) vorgesehen und an einem Rand des Durchgangslochs (210; 220; 111b) positioniert ist, wenn der Verschlussstopfen (10; 20; 30; 40; 50; 60; 70; 80; 90; 113) das Durchgangsloch (210; 220; 111b) verschließt.

3. Energiespeicherelement (110) nach Anspruch 1 oder Anspruch 2,
wobei der verdickte Abschnitt (22a) in einer Zylinderform gebildet ist, die sich von einem Ende des Sockels (22) entgegengesetzt zur Spitze (23) zu einem Ende des Seitenflächenabschnitts (22b) erstreckt.

4. Energiespeicherelement (110) nach einem der Ansprüche 1 bis 3,
wobei entlang mindestens eines Teils des gebogenen Seitenflächenabschnitts (32d) eine Änderungsrate des Außenumfangs eines Querschnitts in einer Ebene senkrecht zur axialen Richtung des Hauptschafts (34) variiert.

5. Energiespeicherelement (110) nach einem der Ansprüche 1 bis 4, ferner umfassend
einen freiliegenden Abschnitt (11; 21; 31; 41; 51; 61; 71; 91), der mit einem Ende des Sockels (12, 22, 32; 42; 52; 62; 82) entgegengesetzt zur Spitze (13; 23; 33; 43; 53; 63; 83) verbunden ist und, wenn der Verschlussstopfen (10; 20; 30; 40; 50; 60; 70; 80; 90; 113) das Durchgangsloch (210; 220; 111 b) verschließt, auf einer Fläche der Wand positioniert ist und somit von der Wand freiliegt.

6. Energiespeicherelement (110) nach einem der Ansprüche 1 bis 5,
wobei eine äußere Form eines Abschnitts des Sockels (12, 22, 32; 42; 52; 62; 82) zwischen einem Ende des Sockels (12, 22, 32; 42; 52; 62; 82) entgegengesetzt zur Spitze (13; 23; 33; 43; 53; 63; 83) und einem Ende des Seitenflächenabschnitts (12b; 22b; 32d; 42b; 52b; 62b) einer inneren Form des Durchgangslochs (210; 220; 111b) entspricht.

7. Energiespeicherelement (110) nach einem der Ansprüche 1 bis 6,
wobei ein Abstand von einem Vorderende der Spitze (13; 23; 33; 43; 53; 63; 83) zum Sockel (12, 22, 32; 42; 52; 62; 82) größer als ein Abstand vom Vorderende der Spitze (13; 23; 33; 43; 53; 63; 83) zu einem Schwerpunkt des Hauptschafts (14; 24; 34; 44; 54; 64; 74; 84; 94) ist.

8. Energiespeicherelement (110) nach einem der Ansprüche 1 bis 7,
wobei die Spitze (13; 23, 33; 43; 53; 63; 83) in der axialen Richtung des Hauptschafts (14; 24; 34; 44; 54; 64; 74; 84; 94) länger als der Sockel (12; 22; 32; 42; 52; 62; 82) ist.

9. Energiespeicherelement (110) nach einem der Ansprüche 1 bis 8,
wobei, wenn der Verschlussstopfen (10; 20; 30; 40; 50; 60; 70; 80; 90; 113) das Durchgangsloch (210; 220; 111b) verschließt, eine Länge des Hauptschafts (14; 24; 34; 44; 54; 64; 74; 84; 94) in der axialen Richtung kleiner oder gleich einer Länge des Durchgangslochs (210; 22; 111 b) in der axialen Richtung ist.

10. Energiespeicherelement (110) nach einem der Ansprüche 1 bis 9,
wobei ein Radius des verdickten Abschnitts (12a; 22a; 32c; 42a, 52a, 62a) kleiner als eine längste gerade Linie ist, die (i) einen Mittelpunkt einer Endfläche des Sockels (12; 22; 32; 42; 52; 62; 82) entgegengesetzt zur Spitze (13; 23; 33; 43; 53; 63; 83) oder einen Mittelpunkt einer Grenzfläche des verdickten Abschnitts (12a; 22, 32c; 42a; 52; 62a) und des Seitenflächenabschnitts (12b; 22b; 32d; 42b, 52b; 62b) und (ii) eine Vorderendfläche der Spitze (13; 23; 33; 43; 53; 53; 83) verbindet.

11. Energiespeicherelement (110) nach einem der Ansprüche 1 und 3 bis 10,
wobei der Sockel (52) einen Seitenflächenabschnitt (52c) aufweist, der zwischen einem Ende des Sockels (12; 22; 32; 42; 52; 62; 82) entgegengesetzt zur Spitze (13; 23; 33; 43; 52; 63; 83) und dem verdickten Abschnitt (12a; 22a; 32c; 42a; 52a; 62a) gebildet ist und einen Querschnitt mit einer Außenkante aufweist, der kleiner als ein Querschnitt mit einer Außenkante des verdickten Abschnitts (12a; 22a; 32c; 42a; 52a; 62a) ist, wobei die Querschnitte sich jeweils in einer Ebene senkrecht zu der axialen Richtung des Hauptschafts (14; 24; 34; 44; 54; 64; 74; 84; 94) erstrecken.

## Revendications

1. Elément de stockage de l'énergie (110) comprenant :
un boîtier (112) ayant une ouverture (112a) ;
un couvercle (111) qui recouvre l'ouverture (112a) ;
un ensemble d'électrode (112) logé dans le boîtier (112) ; et
un tampon d'étanchéité (10 ; 20 ; 30 ; 40 ; 50 ; 60 ; 70 ; 80 ; 90 ; 113) qui scelle un orifice traversant (210 ; 220 ; 111b) formé dans la paroi du couvercle (111) ou dans la paroi du boîtier (112), le tampon d'étanchéité (10 ; 20 ; 30 ; 40 ; 50 ; 60 ; 70 ; 80 ; 90 ; 113) comprenant :
une tige principale (14 ; 24 ; 34 ; 44 ; 54 ; 64 ; 74 ; 84 ; 94) qui peut être placé dans l'orifice traversant (210 ; 220 ; 111b),
dans lequel la tige principale (14 ; 24 ; 34 ; 44 ; 54 ; 64 ; 74 ; 84 ; 94) comprend :
une base (12 ; 22 ; 32 ; 42 ; 52 ; 62 ; 82) ; et
une pointe (13 ; 23 ; 33 ; 43 ; 53 ; 63 ; 83) reliée à l'extrémité frontale de la base (12 ; 22 ; 32 ; 42 ; 52 ; 62 ; 82) et ayant une section transversale ayant un bord extérieur qui est inférieur ou égal au bord extérieur de la section transversale de l'extrémité frontale de la base (12 ; 22 ; 32 ; 42 ; 52 ; 62 ; 82), les sections transversales étant chacune dans un plan perpendiculaire par rapport à la direction axiale de la tige principale (14 ; 24 ; 34 ; 44 ; 54 ; 64 ; 74 ; 84 ; 94), et
la base (12 ; 22 ; 32 ; 42 ; 52 ; 62 ; 82) comprend :
une partie épaisse (12a ; 22a ; 32c ; 42a ; 52a ; 62a) ayant, dans un plan perpendiculaire par rapport à la direction axiale de la tige principale (14 ; 24 ; 34 ; 44 ; 54 ; 64 ; 74 ; 84 ; 94), une section transversale ayant un bord extérieur plus grand ; et
une partie de la surface latérale incurvée (12b ; 22b ; 32d ; 42b ; 52b ; 62b) ayant le bord extérieur de la section transversale dont la dimension diminue en partant de la partie épaisse (12a ; 22a ; 32c ; 42a ; 52a ; 62a) vers la pointe (13 ; 23 ; 33 ; 43 ; 53 ; 63 ; 83).

2. Elément de stockage de l'énergie (110) selon la revendication 1,
dans lequel la partie épaisse (12a ; 22a ; 32c ; 42a ; 52a ; 62a) est prévue à une extrémité de la base (12 ; 22 ; 32 ; 42 ; 52 ; 62 ; 82) à l'opposé de la pointe (13 ; 23 ; 33 ; 43 ; 53 ; 63 ; 83) et positionnée sur le rebord de l'orifice traversant (210 ; 220 ; 111b) lorsque le tampon d'étanchéité (10 ; 20 ; 30 ; 40 ; 50 ; 60 ; 70 ; 80 ; 90 ; 113) scelle l'orifice traversant (210 ; 220 ; 111b).

3. Elément de stockage de l'énergie (110) selon la revendication 1 ou la revendication 2,
dans lequel la partie épaisse (22a) est conçue de forme cylindrique, s'étendant depuis une extrémité de la base (22) à l'opposé de la pointe (23) jusqu'à une extrémité de la partie de la surface latérale (22b).

4. Elément de stockage de l'énergie (110) selon l'une quelconque des revendications 1 à 3,
dans lequel le long d'au moins une partie de la partie de la surface latérale incurvée (32d), le rythme de l'évolution de la circonférence extérieure de la section transversale varie dans un plan perpendiculaire à la direction axiale de la tige principale (34).

5. Elément de stockage de l'énergie (110) selon l'une quelconque de la revendication 1 à la revendication 4, comprenant en outre
une partie exposée (11 ; 21 ; 31 ; 41 ; 51 ; 61 ; 71 ; 91) reliée à une extrémité de la base (12 ; 22 ; 32 ; 42 ; 52 ; 62 ; 82) à l'opposé de la pointe (13 ; 23 ; 33 ; 43 ; 53 ; 63 ; 83) et positionnée, lorsque le tampon d'étanchéité (10 ; 20 ; 30 ; 40 ; 50 ; 60 ; 70 ; 80 ; 90 ; 113) scelle l'orifice traversant (210 ; 220 ; 111b), sur la surface de la paroi de sorte qu'elle est exposée à partir de la paroi.

6. Elément de stockage de l'énergie (110) selon l'une quelconque de la revendication 1 à la revendication 5,
dans lequel la forme externe de la partie de la base (12 ; 22 ; 32 ; 42 ; 52 ; 62 ; 82) entre une extrémité de la base (12 ; 22 ; 32 ; 42 ; 52 ; 62 ; 82) à l'opposé de la pointe (13 ; 23 ; 33 ; 43 ; 53 ; 63 ; 83) et une extrémité de la partie de la surface latérale (12b ; 22b ; 32d ; 42b ; 52b ; 62b) correspond à une forme interne de l'orifice traversant (210 ; 220 ; 111b).

7. Elément de stockage de l'énergie (110) selon l'une quelconque de la revendication 1 à la revendication 6,
dans lequel la distance depuis l'extrémité frontale de la pointe (13 ; 23 ; 33 ; 43 ; 53 ; 63 ; 83) jusqu'à la base (12 ; 22 ; 32 ; 42 ; 52 ; 62 ; 82) est plus grande que la distance depuis l'extrémité frontale de la pointe (13 ; 23 ; 33 ; 43 ; 53 ; 63 ; 83) jusqu'au centre de gravité de la tige principale (14 ; 24 ; 34 ; 44 ; 54 ; 64 ; 74 ; 84 ; 94).

8. Elément de stockage de l'énergie (110) selon l'une quelconque de la revendication 1 à la revendication 7,
dans lequel la pointe (13 ; 23 ; 33 ; 43 ; 53 ; 63 ; 83) est plus longue que la base (12 ; 22 ; 32 ; 42 ; 52 ; 62 ; 82) dans la direction axiale de la tige principale (14 ; 24 ; 34 ; 44 ; 54 ; 64 ; 74 ; 84 ; 94).

9. Elément de stockage de l'énergie (110) selon l'une quelconque de la revendication 1 à la revendication 8,
dans lequel, lorsque le tampon d'étanchéité (10 ; 20 ; 30 ; 40 ; 50 ; 60 ; 70 ; 80 ; 90 ; 113) scelle l'orifice traversant (210 ; 220 ; 111b), la longueur de la tige principale (14 ; 24 ; 34 ; 44 ; 54 ; 64 ; 74 ; 84 ; 94) dans la direction axiale est inférieure ou égale à la longueur de l'orifice traversant (210 ; 220 ; 111b) dans la direction axiale.

10. Elément de stockage de l'énergie (110) selon l'une quelconque de la revendication 1 à la revendication 9,
dans lequel le rayon de la partie épaisse (12a ; 22a ; 32c ; 42a ; 52a ; 62a) est plus petit que la plus grande ligne droite reliant (i) le centre de la surface terminale de la base (12 ; 22 ; 32 ; 42 ; 52 ; 62 ; 82) à l'opposé de la pointe (13 ; 23 ; 33 ; 43 ; 53 ; 63 ; 83) ou le centre de l'interface de la partie épaisse (12a ; 22a ; 32c ; 42a ; 52a ; 62a) et de la partie de la surface latérale (12b ; 22b ; 32d ; 42b ; 52b ; 62b), et (ii) la surface de l'extrémité frontale de la pointe (13 ; 23 ; 33 ; 43 ; 53 ; 63 ; 83).

11. Elément de stockage de l'énergie (110) selon l'une quelconque de la revendication 1, et de la revendication 3 à la revendication 10,
dans lequel la base (52) a une partie de la surface latérale (52c) formée entre une extrémité de la base (12 ; 22 ; 32 ; 42 ; 52 ; 62 ; 82) ) à l'opposé de la pointe (13 ; 23 ; 33 ; 43 ; 53 ; 63 ; 83) et la partie épaisse (12a ; 22a ; 32c ; 42a ; 52a ; 62a), et est formée pour avoir une section transversale ayant un bord extérieur qui est plus petit que le bord extérieur de la section transversale de la partie épaisse (12a ; 22a ; 32c ; 42a ; 52a ; 62a), les sections latérales étant chacune dans un plan perpendiculaire par rapport à la direction axiale de la tige principale (14 ; 24 ; 34 ; 44 ; 54 ; 64 ; 74 ; 84 ; 94).
